# EUROPÄISCHE PATENTANMELDUNG

(11) **EP 0 920 079 A2**
(43) Veröffentlichungstag der Anmeldung: **02.06.1999**
(21) Anmeldenummer: 98105086.7
(22) Anmeldetag: 20.03.1998
(51) Int. Cl.: H01R 4/64, F16L 23/00

(54) **Erdverbindung einer Rohrleitung**

(30) Priorität: 24.11.1997 DE 19751806
(71) Anmelder: IBG Monforts GmbH & Co., 41238 Mönchengladbach (DE)
(72) Erfinder: Hortmanns, Heinz, 41239 Mönchengladbach (DE)
(74) Vertreter: von Creytz, Dietrich, Dipl.-Phys.

(57) **Zusammenfassung**

Es wird eine elektrische Erdungsleitung einer metallischen Einlage einer in eine Flanschverbindung einer Rohrleitung geklemmten, gegenüber den Rohrflanschen isolierten Dichtung beschrieben. Die metallische Einlage besitzt eine aus der Flanschverbindung radial herausgeführte Erdungslasche. Benachbarte Rohrflansche werden mit Hilfe von durch Flanschbohrungen gezogene Klemmschrauben miteinander verbunden. Um die metallische Einlage zu erden, wird die Erdungslasche um die Peripherie des jeweils einen Rohrflansches herum sowie auf dessen Rückseite über den Sitz der jeweiligen Klemmschraube hinaus verlängert und mit je einem Loch zum Hindurchführen der Klemmschraube auf Rück- und Vorderseite des Rohrflansches ausgestattet.

## Beschreibung

Die Erfindung betrifft eine elektrische Erdungsleitung einer metallischen Einlage einer in eine Flanschverbindung einer Rohrleitung geklemmten Dichtung mit Isolierstoffmantel, wobei zum Verbinden der Rohrflansche jeweils mehrere durch Bohrungen der Rohrflansche gezogene Klemmschrauben vorgesehen sind und wobei die metallische Einlage zum Ableiten einer elektrischen Aufladung eine zwischen den Rohrflanschen der Flanschverbindung herausgeführte Erdungslasche besitzt.

Rohrleitungen, die in chemischen Betrieben oder dergleichen oft aus besonderen Materialien herzustellen und/oder innen zu emaillieren sind, müssen bei der Montage häufig an vielen Stellen miteinander über Flanschverbindungen verbunden werden. Im Grundsatz können dabei angeformte, z.B. angeschweißte, Rohrflansche miteinander verschraubt werden. Alternativ können zwei miteinander zu verschraubende Losflansche zum Verbinden der Rohrenden eingesetzt werden.

Wenn die Rohrenden bzw. -flansche nicht unmittelbar aneinandergelegt werden dürfen, sondern Dichtungen, insbesondere Dichtringe, zwischenzufügen sind, müssen die Dichtungen meist bei der Montage zentriert werden. Bei unexakter Zentrierung der Dichtung kann die jeweilige Verbindung undicht werden und/oder es kann der Durchlaßquerschnitt verringert werden.

Ein weiteres Problem kommt bei Rohrleitungen hinzu, in denen aufladbare Flüssigkeiten, wie Benzine (Hepthan-Hexan), Toluol, Xylol, Äther, Dioxan, usw. gefördert werden sollen. In diesen Fällen können isolierte Leitungsteile bei ungenügender Erdung so hoch elektrostatisch aufgeladen werden, daß zündfähige Entladungen denkbar sind. Das gilt beispielsweise für innen emaillierte Rohrleitungen, die außen mit Epoxid-Polyester-Pulverbeschichtungen als Korrosionsschutz versehen sind. Derartige Beschichtungen sind elektrisch schlecht leitend.

Die elektrostatische Aufladung des jeweiligen Rohrteils selbst macht meist die geringeren Probleme; es genügt, die Leitung an irgendeiner Stelle zu erden und an jeder (Flansch-)Verbindungsstelle elektrisch leitende Übergänge, z.B. durch Fächerscheiben, Spießblech-Scheiben oder dergleichen, zu schaffen.

Aufwendig ist es, die eingangs genannten Dichtungen selbst zu erden. Hierfür wird in der derzeitigen Praxis die metallische Einlage, z.B. ein Wellring, jeder einzelnen Dichtung über eine gesonderte Drahtleitung geerdet. Dazu wird die Drahtleitung an eine an die metallische Einlage der Dichtung angeformte Erdungslasche angeklemmt. Wenn also der Rohrmonteur die jeweilige Leitung fertig installiert hat, muß jede einzelne Dichtung durch einen Elektromonteur geerdet werden. Diese oft über Kopf auszuführende Arbeit erfordert z.B. das Zusammenschrauben mehrerer Ösen und Ringe, um einen sicheren elektrischen Kontakt zu schaffen.

Der Erfindung liegt die Aufgabe zugrunde, das mechanische Zentrieren der Dichtungen beim Montieren der jeweiligen Rohrleitung und das elektrische Erden der metallischen Dichtungseinlage zu erleichtern; der jeweilige Hilfsmittelaufwand soll verringert und das Arbeitsergebnis soll verbessert werden; insbesondere wird angestrebt, ohne gesondert an jeden Dichtring bzw. dessen Erdungslasche anzuklemmende Drahtleitungen auszukommen.

Die erfindungsgemäße Lösung wird im Kennzeichen des Anspruchs 1 beschrieben. Die Lösung besteht für die eingangs genannte Erdungsleitung im wesentlichen darin, daß die Erdungslasche um die Peripherie des jeweils einen Rohrflansches herum- sowie auf dessen vom anderen Rohrflansch abgewandter Rückseite über den Sitz der jeweiligen Klemmschraube hinausreicht und daß die Erdungslasche ein Zentrierloch zum Hindurchführen der Klemmschraube auf der dem anderen Rohrflansch zugewandten Flanschvorderseite sowie ein entsprechendes Erdungsloch auf der Flanschrückseite besitzt. Im Rahmen der Erfindung ist es unerheblich, ob es sich um fest am jeweiligen Rohr angeformte Rohrflansche oder um ein- oder mehrteilige Losflansche handelt. Die Erdungslasche kann auch als Erdungszunge bezeichnet werden.

Erfindungsgemäß besitzt die Erdungslasche wenigstens zwei Löcher und sie ist so lang, daß sie - etwa radial (in Bezug auf die Rohrleitung bzw. -achse) aus der Dichtung herausgeführt - um die Peripherie des einen Rohrflansches bis über die Bohrungsöffnung auf die Flanschrückseite hinausreicht. Bei der Montage wird die Erdungslasche so um die Flanschperipherie herumgelegt, daß die beiden Löcher der Erdungslasche mit einer für eine Klemmschraube vorgesehenen Flanschbohrung fluchten. Die Erdungslasche wird daher beim Einstecken der Schraube in die Bohrung zweimal von ein und derselben Schraube durchstoßen.

Die erfindungsgemäße Erdungslasche besitzt wenigstens zwei Löcher; mindestens zwei dieser Löcher - sogenannte Hauptlöcher - sollen annähernd den Durchmesser der den Klemmschrauben zugeordneten Flanschbohrung besitzen. Daneben können Löcher (eventuell anderen Durchmessers), z.B. zum Anklemmen einer elektrischen Leitung, vorgesehen werden. Der Abstand der genannten beiden Hauptlöcher auf der Länge der Erdungslasche soll so groß sein, daß die Erdungslasche (für das Hindurchstecken der jeweiligen Klemmschraube) ohne schädliche Spannung - aber möglichst an der Flanschperipherie anliegend - um die Peripherie herum zu legen ist.

Die an gegenüberliegenden Längsenden der Erdungslasche befindliche Hauptlöcher der Erdungslasche besitzen unterschiedliche Aufgaben und Vorteile. Das Hauptloch am freien Längsende der Erdungslasche wird außen auf der Rückseite des jeweiligen Flansches beim Anschrauben zwischen Klemmschraube und zweckmäßig einer Fächerscheibe oder dergleichen elektrischem Kontaktmittel eingeklemmt. Über dieses erste Hauptloch wird der elektrische Kontakt zur Rohrleitung und damit zur Erde hergestellt. Es kann daher als Erdungsloch bezeichnet werden. Das andere Hauptloch der Erdungslasche, das annähernd denselben Abstand von der Rohr-, Flansch- oder Dichtungsmitte (bzw. - achse) wie die jeweilige Flanschbohrung besitzen soll, liegt relativ nahe an der Dichtung bzw. sogar im Bereich der Dichtung. Es wirkt beim Hindurchstecken bzw. Auffädeln der beiden Hauptlöcher auf einer Klemmschraube zentrierend in Bezug auf die Dichtung und wird daher als Zentrierloch bezeichnet. Falls unterschiedliche Flanschtypen mit ein und demselben Dichtungstyp auszustatten sein sollen, können (zur Anpassung) zwei oder mehr Erdungs- und/oder Zentrierlöcher auf Abstand in der Erdungslasche vorgesehen werden.

Die die beiden Hauptlöcher aufweisende Erdungslasche besteht zweckmäßig einteilig aus demselben Material wie die metallische Dichtungseinlage. Diese kann ihre Aufgabe insbesondere dann gut erfüllen, wenn sie als Wellring, mit in Bezug auf die Flanschachse koaxialen Ringen ausgebildet ist. Eine solche Einlage besitzt eine erhebliche Flächenstabilität. Eine an die Einlage angeformte Erdungslasche läßt sich daher ohne Kraftaufwand nicht um ihre Längsachse verdrehen.

Durch ein- und dieselbe Maßnahme werden erfindungsgemäß zugleich eine vereinfachte mechanische Zentrierung und eine vereinfachte elektrische Erdung erreicht. Durch das Verschrauben des Erdungslochs erreicht bereits der Rohrmonteur eine elektrische Erdung der Dichtung, ohne daß ein Elektriker hinzugerufen werden müßte. Weiterhin sind Verletzungen der Erdung oder Beschädigungen der eng um die Flanschperipherie liegenden Erdungslasche bei weiteren Rohrinstallationen in der Nachbarschaft weniger als bei herkömmlicher Draht-Erdung zu befürchten. Schließlich läßt sich die Erdungsfunktion einer erfindungsgemäßen Erdungslasche schon durch Augenschein prüfen, besondere Prüfgeräte sind nicht erforderlich.

Anhand der schematischen Darstellung eines Ausführungsbeispielen werden Einzelheiten der Erfindung erläutert. Es zeigen:
- **Fig. 1**: einen Schnitt parallel zur Rohrachse durch eine Flanschverbindung; und
- **Fig. 2**: die Draufsicht auf die metallische Einlage eines Dichtrings mit angeformter Erdungslasche.

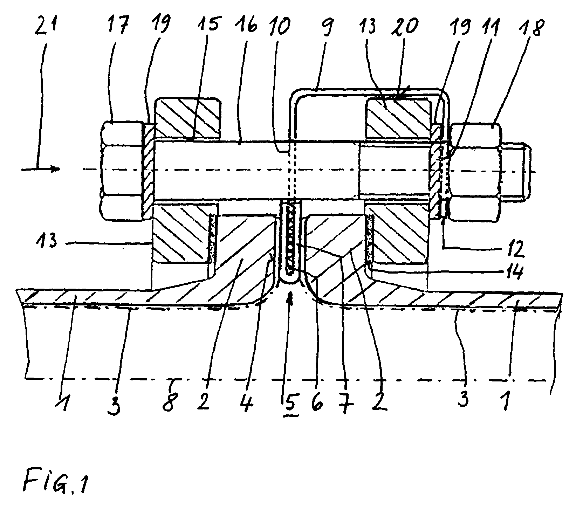

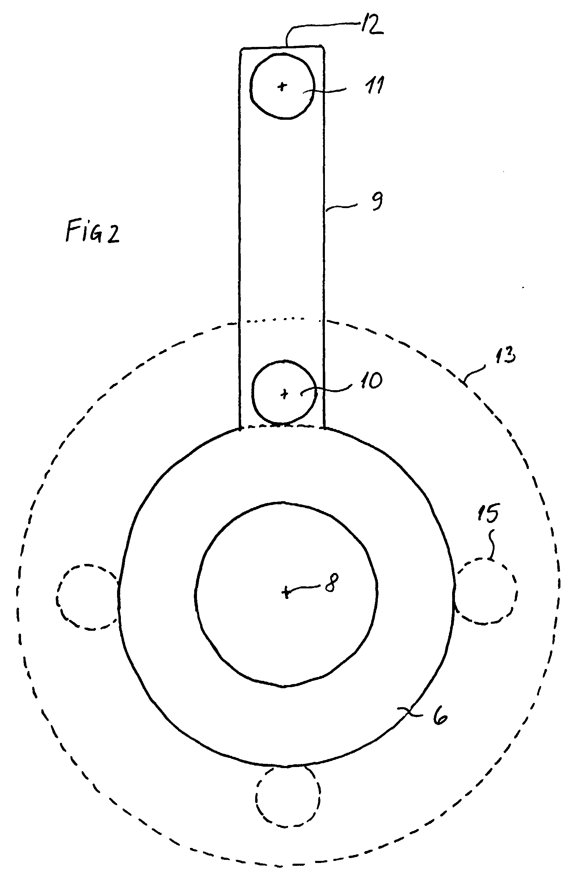

Im Ausführungsbeispiel nach Fig. 1 wird angenommen, daß eine innen emaillierte Rohrleitung 1 aus Stahl an ihren Rohrflanschen 2 zu verbinden ist. Eine Emailschicht 3 der Rohr-Innenseite soll im Ausführungsbeispiel auch die Stoßflächen 4 der Rohrflansche 2 bedecken. Zwischen die Stoßflächen 4 wird nach Fig. 1 eine PTFE-ummantelte Dichtung 5 gelegt (PTFE = Polytetrafluorethylen). Die Dichtung 5 soll eine im wesentlichen als elastischer Wellring (mit konzentrischer Wellung) ausgebildete metallische Einlage 6 enthalten, die im dargestellten Schnitt U-förmig von einem PTFE-Mantel 7 umgeben ist; die geschlossene U-Seite sei der Rohrachse 8 zugewandt. An die metallische Einlage 6 wird nach Fig. 1 und 2 eine Erdungslasche 9, vorzugsweise einteilig (das heißt die Einlage 6 und die Lasche 9 sollen aus einem Teil, z.B. Blech, bestehen), angeformt. Die Erdungslasche 9 nach Fig. 2 besitzt zwei (Haupt-)Löcher, nämlich ein Zentrierloch 10, im wesentlichen angrenzend an den Körper der Einlage 6, und ein Erdungsloch 11 im Bereich des freien Längsendes 12 der Erdungslasche 9.

Zum Verbinden der beiden Rohrflansche 2 nach Fig. 1 werden im Ausführungsbeispiel (geteilte) Losflansche 13 vorgesehen. Zwischen die Losflansche 13 und die Außen- bzw. Rückseite der Rohrflansche 2 wird ein Spießblech 14 gelegt, um den elektrischen Kontakt auch an dieser Stelle sicherzustellen. Die Losflansche 13 besitzen mehrere, z.B. vier Bohrungen 15 (vgl. Fig. 2), durch die je eine Klemmschraube 16 zu ziehen ist. Zwischen Schraubenkopf 17 und Losflansch 13 sowie zwischen Schraubenmutter 18 und Losflansch 13 wird zum Sicherstellen einer elektrisch leitenden Verbindung je eine Fächerscheibe 19 oder dergleichen eingelegt. Wenn also die Rohrleitung 1 an irgendeiner Stelle geerdet wird, sind alle beschriebenen Teile der Leitung mit Losflanschen und Schrauben mitgeerdet. Eine Erdung der metallischen Einlage 6 der Dichtung 5 wird allerdings auf diese Weise noch nicht erreicht.

Zur Erdung der metallischen Einlage 6 dient die gesonderte Erdungslasche 9. Diese besitzt erfindungsgemäß ein Zentrierloch 10 und ein Erdungsloch 11 (jeweils etwa mit dem Durchmesser der Flanschbohrungen 15). Die Position des Zentrierlochs 10 in Bezug auf den Körper der metallischen Einlage 6 sowie der Abstand der Löcher 10 und 11 werden so gewählt, daß ein und dieselbe Klemmschraube 16 bei der Montage zweimal durch die um die Peripherie 20 des einen (in Fig. 1, rechts) Losflansches 13 herumgeführte Erdungslasche 9 hindurch zu führen ist. Der gegenseitige Abstand der beiden Löcher 10 und 11 ist also so groß zu wählen, daß die Erdungslasche 9 in der Anordnung nach Fig. 1 ohne unzulässige Längsspannung außen um die Peripherie 20 herumzulegen ist. Bei der Montage wird die Schraube 16 in Steckrichtung 21 zuerst durch den in Fig. 1 linken Losflansch 13, dann durch das Zentrierloch 10, danach durch den anderen Losflansch 13 und schließlich durch das Erdungsloch 11 hindurchgesteckt. Durch eine oder mehrere Fächerscheiben 19 zwischen Schraubenkopf 17 bzw. Mutter 18 und Losflansch 13 wird ein elektrischer Kontakt mit minimalem Widerstand auch zwischen Erdungslasche 9 und dem Rohrkörper hergestellt, so daß die gewünschte Erdung der Dichtungseinlage 6 ebenfalls erreicht wird.

Es wird eine elektrische Erdungsleitung einer metallischen Einlage einer in eine Flanschverbindung einer Rohrleitung geklemmten, gegenüber den Rohrflanschen isolierten Dichtung beschrieben. Die metallische Einlage besitzt eine aus der Flanschverbindung radial herausgeführte Erdungslasche. Benachbarte Rohrflansche werden mit Hilfe von durch Flanschbohrungen gezogene Klemmschrauben miteinander verbunden. Um die metallische Einlage zu erden, wird die Erdungslasche um die Peripherie des jeweils einen Rohrflansches herum sowie auf dessen Rückseite über den Sitz der jeweiligen Klemmschraube hinaus verlängert und mit je einem Loch zum Hindurchführen der Klemmschraube auf Rück- und Vorderseite des Rohrflansches ausgestattet.

### Bezugszeichenliste

- 1: = Rohrleitung
- 2: = Rohrflansch (1)
- 3: = Emailschicht
- 4: = Stoßflächen (2)
- 5: = Dichtung
- 6: = Einlage (5)
- 7: = Mantel (5)
- 8: = Rohrachse
- 9: = Erdungslasche
- 10: = Zentrierloch
- 11: = Erdungsloch
- 12: = Längsende (9)
- 13: = Losflansch
- 14: = Spießblech
- 15: = Bohrung (13)
- 16: = Klemmschraube
- 17: = Schraubenkopf
- 18: = Schraubenmutter
- 19: = Fächerscheibe
- 20: = Peripherie (13)
- 21: = Steckrichtung

## Patentansprüche

1. Elektrische Erdungsleitung einer metallischen Einlage (6) einer in eine Flanschverbindung einer Rohrleitung (1) geklemmten Dichtung (5) mit Isolierstoffmantel (7), wobei zum Verbinden der Rohrflansche (2, 13) jeweils mehrere durch Bohrungen (15) der Rohrflansche (13) gezogene Klemmschrauben (16) vorgesehen sind und wobei die metallische Einlage (6) zum Ableiten einer elektrischen Aufladung eine zwischen den Rohrflanschen (2) der Flanschverbindung herausgeführte Erdungslasche (9) besitzt,
**dadurch gekennzeichnet,**
daß die Erdungslasche (9) um die Peripherie (20) des jeweils einen Rohrflansches (13) herum- sowie auf dessen vom anderen Rohrflansch abgewandter Rückseite über den Sitz der jeweiligen Klemmschraube (16) hinausreicht und daß die Erdungslasche (9) mindestens zwei Löcher (10, 11) besitzt, von denen mindestens eines ein Zentrierloch (10) zum Hindurchführen der Klemmschraube (16) auf der dem anderen Flansch zugewandten Flanschvorderseite sowie ein Erdungsloch (11) zum Hindurchführen der Klemmschraube (16) auf der Flanschrückseite ist.

2. Elektrische Erdungsleitung nach Anspruch 1,
**dadurch gekennzeichnet,**
daß die Erdungslasche (9) in ihren beiden Löchern - also zweimal - von ein und derselben Klemmschraube (16) durchstoßen um die Flanschperipherie (20) herumgelegt und auf der Flanschrückseite elektrisch leitend an den Flanschkörper geklemmt ist.
